Europäisches Patentamt

European Patent Office

Office européen des brevets

(11) Veröffentlichungsnummer: **0 519 413 A1**

# (12) EUROPÄISCHE PATENTANMELDUNG

(21) Anmeldenummer: **92110190.3**

(22) Anmeldetag: **17.06.92**

(51) Int. Cl.⁵: **A01K 93/00**

(30) Priorität: **20.06.91 EP 91110203**

(43) Veröffentlichungstag der Anmeldung:
**23.12.92 Patentblatt 92/52**

(84) Benannte Vertragsstaaten:
**AT BE CH DE DK ES FR GB GR IT LI NL PT SE**

(71) Anmelder: **Mpizanis, Leonidas**
**Moltkestrasse 44**
**W-6600 Saarbrücken 1(DE)**

(72) Erfinder: **Mpizanis, Leonidas**
**Moltkestrasse 44**
**W-6600 Saarbrücken 1(DE)**

(74) Vertreter: **Brommer, Hans Joachim, Dr.-Ing. et al**
**Patentanwälte Dipl.-Ing. R. Lemcke Dr.-Ing. H.J. Brommer Bismarckstrasse 16 Postfach 4026**
**W-7500 Karlsruhe 1(DE)**

(54) **Pose für Angelschnur.**

(57) Das besondere der neuen Pose (1) ist darin zu sehen, daß sie eine Klemmvorrichtung (6) mit Schlitzen (7) aufweist, in welche die Angelschnur (8) einzuklemmen ist. Nach Einholen der Angelschnur (8) löst sie sich selbsttätig aus dem Schlitz (7). Damit die Pose auch zum Angeln in vorbestimmter Höhe über Gewässergrund geeignet ist, weist sie einen Haken (5) auf, in den die Angelschnur (8) einhängbar ist, so daß beim Einholen der Angelschnur (8) die Pose (1) ihre Position an der Schnur (8) beibehält und der Angler die Wassertiefe zwischen Pose (1) und Senkblei erkennen und dadurch leicht die gewünschte Angeltiefe durch Verschieben der Pose und anschließendes Festklemmen einstellen kann.

Fig. 1

EP 0 519 413 A1

Die Erfindung betrifft eine Pose mit einer Gleitführung für die Angelschnur und mit einer Klemmvorrichtung zum lösbaren Befestigen der Pose auf der Angelschnur.

Beim Angeln schwimmen die Posen, die deshalb auch Schwimmer genannt werden, als Zielpunkt an der Wasseroberfläche, um den Angler über die Position der Angelschnur bzw. des Hakens zu orientieren. Zugleich fungieren sie auch als Bißanzeiger, denn beim Anbeißen eines Fisches bewegen sie sich.

Außerdem werden Posen auch dann verwendet, wenn der Köder in einem bestimmten Abstand über dem Gewässergrund schwebend dem Fisch angeboten werden soll. Dann trägt die Pose das mit Gewichten beschwerte Ende der Angelschnur, an der dann meist über ein sogenanntes Vorfach ein oder mehrere Angelhaken mit Köder in der gewünschten Tiefe befestigt sind. In diesem Fall fungiert also die Pose nicht nur als Anzeigeinstrument, sondern auch als Träger, um ein Absinken des Köders auf den Boden zu verhindern.

Bekannt ist aus dem DE-GM 87 06 869 eine Lauf- und Feststellpose, die eine zigarrenähnliche Form aufweist, und bei der die Angelschnur durch zwei übereinander angeordnete, an der Pose befestigte Ösen außen an der Pose freilaufend entlanggeführt wird (Laufpose). Zum Angeln in gewünschter Tiefe wird die Angelschnur durch eine zusätzlich an der Pose angebrachte Federstange an den Posenkörper gedrückt und festgeklemmt (Feststellpose).

Diese Pose ist jedoch relativ schwierig in der Handhabung. Insbesondere beim Angeln in großer Tiefe stößt die Pose nach dem Einholen der Angelschnur frühzeitig an der Rutenspitze an und muß von Hand gelöst werden. Abgesehen davon besteht die Gefahr von Beschädigungen der Federstange beim Gebrauch.

Hiervon ausgehend liegt der Erfindung die Aufgabe zugrunde, eine Pose zu entwickeln, die die vorgenannten Nachteile nicht aufweist. Insbesondere soll sich die Pose durch folgende Eigenschaften auszeichnen: leichtes Einstellen der gewünschten Angeltiefe über Grund, Zuverlässigkeit im Angelbetrieb, und beim Einholen der Angelschnur soll sich die Pose selbständig von der Angelschnur lösen.

Diese Aufgabe wird erfindungsgemäß dadurch gelöst, daß die Klemmvorrichtung mindestens einen Schlitz aufweist, in dem die Angelschnur verklemmbar ist.

Durch die schlitzförmige Ausbildung der Klemmvorrichtung ergibt sich der Vorteil, daß die Pose in jeder gewünschten Position an der Angelschnur festgelegt werden kann und daß diese Festlegung mühelos und ohne Hilfsmittel von außen aufgehoben werden kann, in dem die Angelschnur durch Ziehen wieder aus dem Schlitz herausrutscht. Beim Einholen der Angelschnur erfolgt dies automatisch, wenn die Pose am oberen Ende der Angelrute bzw. an dem dort angeordneten Führungsring anstößt.

Um das Festklemmen und insbesondere das automatische Lösen der Angelschnur aus der Klemmvorrichtung zu begünstigen, empfiehlt es sich, daß der Schlitz bezogen auf den von der Pose weglaufenden Teil der Angelschnur etwa senkrecht dazu verläuft und in Richtung des genannten Teiles der Angelschnur offen ist. Zu dem gleichen Zweck besteht die Klemmvorrichtung vorzugsweise aus einem elastischen Körper, der an der Oberseite einen oder mehrere Schlitze aufweist und der benachbart zur Gleitführung der Pose angeordnet ist.

Dabei hat es sich als günstig erwiesen, wenn der elastische Körper seitlich über eine Abstufung oder eine Abrundung in diese Gleitführung übergeht, insbesondere, wenn er aus einem Ring besteht, der radial geschlitzt ist und in seinem Zentrum in die Gleitführung übergeht.

Die Gleitführung kann in einfacher Weise durch ein zentrales Innenrohr gebildet sein, das den als Schwimmkörper dienenden Hohlkörper der Pose durchquert.

Hinsichtlich der Positionierung der Klemmvorrichtung an der Pose ist es günstig, wenn die Klemmvorrichtung am rutenseitigen Ende der Gleitführung angeordnet wird und wenn am gegenüberliegenden Ende der Gleitführung ein vorstehender Ring, insbesondere aus elastischem Material, angebracht ist. Letzterer erleichtert das Festhalten der zum Haken laufenden Angelschnur, während man den anderen, zur Rute laufenden Teil der Angelschnur in den Schlitz der Klemmvorrichtung hinein drückt.

Die Klemmvorrichtung kann in beliebiger Weise mit der Pose verbunden sein. Besonders günstig ist es, wenn sie austauschbar in einem sie seitlich umgegebenden Träger angeordnet ist, der seinerseits in Verlängerung der Schlitze der Klemmvorrichtung etwas größere Aussparungen aufweist, um das Festklemmen der Angelschnur in dem Schlitz zu erleichtern.

Da die Klemmvorrichtung bevorzugt an einer Pose verwendet wird, die sowohl als Lauf- wie auch als Feststellpose geeignet ist, empfiehlt es sich in Weiterbildung der Erfindung, daß die Gleitführung mit einem dazu seitlich versetzten Haken derart zusammenwirkt, daß beim Nachgeben der Angelschnur die Schnur aufgrund ihrer Gewichtsbelastung bis zum Erreichen des Grundes durch die Pose durchrutscht, wogegen bei gestrafftem Schnurverlauf zwischen Angel und Pose beim Einholen der Schnur die Pose von der Angelschnur gehalten und mitgenommen wird.

Hierdurch ergibt sich der Vorteil, daß bei nichtfestgeklemmter, sondern durch den Haken laufender Schnur beim Auswerfen des Köders die Angelschnur durch die Pose durchrutschen kann, bis das Gewicht, also das Senkblei, auf Grund liegt.

Die Gleitführung hält während dieses Durchrutschens die Pose in aufgerichteter Stellung. Ist das Gewicht auf Grund angekommen, so legt sich der Schwimmer aufgrund der nachlassenden Zugspannung in der Schnur um. Der Angler erkennt dies und beginnt die Schnur einzuholen. Entscheidend ist nun, daß bei diesem Einholen der Schnur der Schwimmer nicht wieder zurückrutscht, sondern seine Position an der Schnur beibehält. Dadurch erkennt der Angler, wie groß die Schnurlänge von der Wasseroberfläche bis zum Grund, also wie groß die Wassertiefe ist. Er braucht dann lediglich die Pose um soviele Meter in Richtung zum Gewicht hin verschieben, wie er über Grund angeln möchte. In der gewünschten Stellung wird die Angelschnur dann mit der Pose verklemmt, wobei sie zweckmäßig aus dem Haken gelöst wird. Danach wird die Schnur mit Köder erneut ausgeworfen. Die Pose und die Klemmvorrichtung, die so bemessen sein müssen, daß sie das Senkblei auf jeden Fall zu tragen vermögen, gewährleisten dann, daß der Köder in der gewünschten Höhe über Grund ausgebracht wird.

Zur Herstellung der gewünschten Reibungsverhältnisse in der Gleitführung derart, daß die Angelschnur einerseits bis zum Erreichen des Grundes durch die Pose hindurchrutscht, andererseits beim Einholen der Schnur von ihr gehalten und mitgenommen wird, braucht der Haken lediglich gegenüber der Gleitführung genügend weit seitlich versetzt zu sein und nur einen relativ kleinen Öffnungsschlitz an der Seite aufweisen, wo die Angelschnur nicht von alleine herausrutschen kann. Nach Wiedereinholen der Schnur kann die Schnur aus dem Haken herausgenommen und an der Pose so festgeklemmt werden, daß letztere zuverlässig die Gewichtsbelastung trägt.

Besonders zweckmäßig ist es dabei, wenn der Haken an den zuvor genannten Träger der Klemmvorrichtung angeformt ist.

Weitere Merkmale und Vorteile der Erfindung ergeben sich aus der nachfolgenden Beschreibung eines Ausführungsbeispieles anhand der Zeichnung; Dabei zeigt

Fig. 1 die Einzelteile einer erfindungsgemäßen Pose in halbperspektivischer Darstellung;

Fig. 2 die aus den Einzelteilen gemäß Fig. 1 zusammengesetzte Pose;

Fig. 3 eine erfindungsgemäße Pose zum leichten Erkennen der Angeltiefe und

Fig. 4 die erfindungsgemäße Pose als Feststellpose.

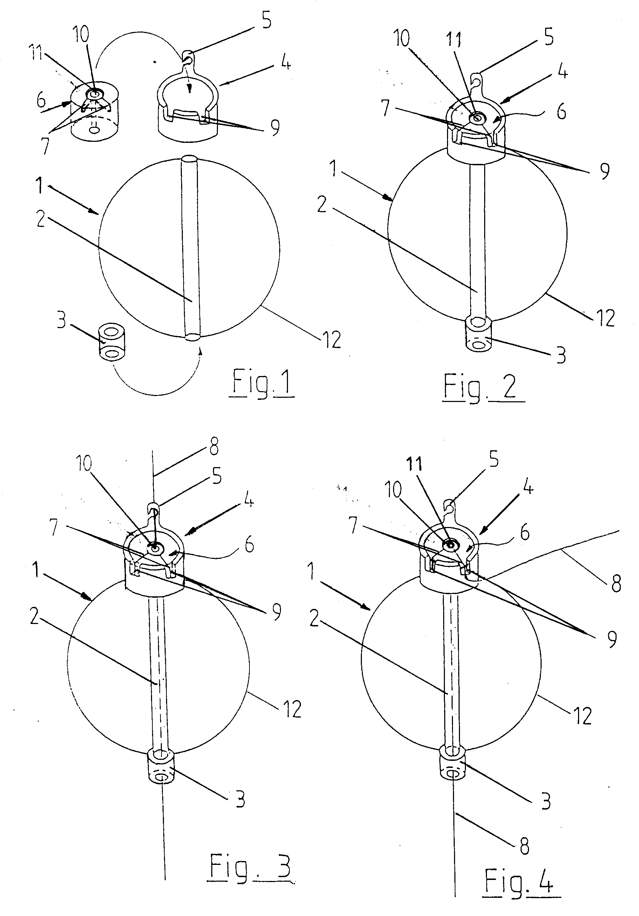

Die in den Fig. 1 bis 4 als Ausführungsbeispiel gewählte Pose 1 besteht im wesentlichen aus einem kugelförmigen Hohlkörper 12, in dessen Innern eine diametral verlaufende hülsenförmige Gleitführung 2 für die Angelschnur angeordnet ist, aus einem ringförmigen Träger 4, der am oberen Ende zu einem Haken 5 ausgebildet ist, aus einer Klemmvorrichtung 6 in Form eines elastischen zylindrischen Körpers und aus einem unteren zylindrischen Ring 3.

Der Träger 4 ist, wie in Fig. 2 dargestellt, am rutenseitigen Ende der Gleitführung 2 auf dem Hohlkörper 12 befestigt und dient zur Aufnahme der Klemmvorrichtung 6. Die Klemmvorrichtung 6, die aus einem Ring aus elastischem Werkstoff, beispielsweise Gummi, besteht und auf den Innendurchmesser des Trägers 4 abgestimmt ist, wird wie ein Stopfen in den hülsenförmigen Träger 4 gepreßt und ist dadurch gegen unbeabsichtigtes Lösen verklemmt und gesichert.

Die Klemmvorrichtung 6 weist eine zentrale Bohrung 10 auf, die mit der hülsenförmigen Gleitführung 2 in Verbindung steht. Von der Bohrung 10 ausgehend folgt eine Abstufung 11 zur Ringoberseite in dem Ring 6 sowie zwei radial nach außen verlaufende Schlitze 7, die einige Millimeter tief sind. Den Schlitzen 7 zugeordnet sind Ausparungen 9 im oberen Rand des Trägers 4. - Es ist natürlich denkbar, auch nur einen Schlitz 7 oder mehr als zwei Schlitze 7 vorzusehen.

Der untere zylindrische Ring 3, der vorzugsweise aus Hartgummi besteht, ist auf der dem Vorfach zugewandten Seite des Hohlkörpers 12 in Verlängerung der Gleitführung 2 befestigt; er dient als Austrittsöffnung für die innengeführte Angelschnur 8 und schützt diese vor Beschädigungen beim Ab- und Aufrollen und dient außerdem zum Festhalten, wenn die Schnur im Befestigungselement 6 verklemmt werden soll.

Fig. 3 zeigt die Pose, wenn sie auf eine bestimmte Höhe über Gewässergrund eingestellt werden soll. Dazu wird die Angelschnur 8 in den Haken 5 des Trägers 4 eingehängt, über die Abstufung 11 durch die Bohrung 10 der Klemmvorrichtung 6 der Gleitführung 2 des Hohlkörpers 12 zugeführt und über den zylindrischen Ring 3 aus der Pose 1 hinausgeführt. Beim Aufbringen der Pose 1 auf die Wasseroberfläche gleitet die Angelschnur 8 vom Gewicht des am Vorfach montierten Senkbleis gezogen durch die Pose und stoppt, wenn das Senkblei den Gewässergrund erreicht hat. Beim Einholen der Schnur behält der Schwimmer seine Position an der Schnur, weil er durch Verspannung an dem Haken 5 gehalten wird, und der Angler erkennt in dem Abstand zwischen Senkblei und Pose die Wassertiefe.

Anschließend löst der Angler die Schnur 8 vom Haken 5 und verschiebt die Pose nach unten, bis das Senkblei oder die Köder die gewünschte Höhe über dem Gewässergrund einnehmen. Dann wird die Angelschnur 8 von oben in einen der horizontal verlaufenden Schlitze 7, wie in Fig. 4 gezeigt, eingedrückt. Dieses Eindrücken wird durch die gut sichtbaren Aussparungen erleichtert. Die Schlitze 7 sind so ausgebildet, daß ihre Breite praktisch Null, zumindest aber kleiner ist als der Durchmesser der Angelschnur 8 und eine Klemmwirkung zwischen Schlitz 7 und Angelschnur 8 herstellbar ist.

Hierauf wird die Angel wieder ausgeworfen. Wenn Senkblei und Köder die gewünschte Tiefe erreicht haben, strafft sich die Angelschnur 8 unterhalb der Pose 1 und richtet diese auf, wobei die Pose den Köder in der richtigen Höhe hält.

Nach Anbeißen eines Fisches läßt sich die Angelschnur 8 durch eine ruckartige Bewegung gegen das Gewicht des Senkbleis und des Fisches leicht aus dem Schlitz 7 lösen und das Einrollen der Angelschnur 8 erfolgt dann in gleicher Weise wie bei einer Laufpose frei gleitend durch die Gleitführung 2.

Beim Angeln mit extrem leichtem Senkblei kann unter Umständen das ruckartige Anschlagen nicht ausreichen, um die Angelschnur 8 sofort aus dem Schlitz 7 zu lösen. In diesem Fall wird die Angelschnur 8 einfach eingeholt bis die Pose 1 an den obersten Rutenring stößt und sich die Angelschnur 8 automatisch aus dem Schlitz 7 löst.

Zusammenfassend liegt also der Kern der Erfindung darin, daß sich die Angelschnur 8 ohne die bei den bekannten Feststellposen auftretenden Schwierigkeiten und Behinderungen automatisch von der Pose lösen und einrollen läßt, da sie sich aufgrund der erfindungsgemäßen Ausbildung der Klemmvorrichtung selbsttätig von der Pose löst. Als besonders günstig erweist sich außerdem, daß die Angelschnur 8 an der Pose 1 so umgelenkt wird, daß sie beim Nachgeben der Angelschnur bis zum Erreichen des Grundes durchrutschen kann, wogegen die Pose beim Einholen der Schnur automatisch festgehalten und mitgenommen wird, so daß der Angler die Wassertiefe zwischen Pose und Senkblei erkennt und die Pose entsprechend der gewünschten Angeltiefe verschieben und festklemmen kann. Die Pose 1 ist daher besonders geeignet beim Angeln in sehr großer Tiefe.

Die Ausbildung der Erfindung ist selbstverständlich nicht nur auf die als Ausführungsbeispiel gewählte Kugel- oder Birnenform der Pose beschränkt. Alle bekannten Posentypen sind erfindungsgemäß ausstattbar.

Es liegt im Rahmen der Erfindung, nicht nur einen, sondern mehrere Haken vorzusehen. Diese Haken können in geeigneter Weise auf der Pose verteilt angeordnet werden.

Ebenso liegt es im Rahmen der Erfindung, die Klemmvorrichtung an beliebiger Stelle der Pose, auch mehrfach, beispielsweise unten und oben vorzusehen.

Nicht zuletzt besteht auch Freiheit bezüglich des Verlaufes der Angelschnur. Die Angelschnur braucht also nicht unbedingt die Pose zu durchqueren, sondern kann stattdessen oder zusätzlich auch an der Außenseite der Pose verlegt werden.

**Patentansprüche**

1.  Pose (1) mit einer Gleitführung (2) für die Angelschnur (8) und mit einer Klemmvorrichtung (6) zum lösbaren Befestigen der Pose (1) auf der Angelschnur (8),
    dadurch gekennzeichnet,
    daß die Klemmvorrichtung (6) mindestens einen Schlitz (7) aufweist, in dem die Angelschnur (8) verklemmbar ist.

2.  Pose nach Anspruch 1,
    dadurch gekennzeichnet,
    daß der Schlitz (7) bezogen auf den von der Pose weglaufenden Teil der Angelschnur (8) etwa senkrecht dazu verläuft und in Richtung des genannten Teiles der Angelschnur (8) offen ist.

3.  Pose nach Anspruch 1,
    dadurch gekennzeichnet,
    daß die Klemmvorrichtung (6) aus einem elastischen Körper besteht, der an einer Oberseite geschlitzt und benachbart zur Gleitführung (2) angeordnet ist.

4.  Pose nach Anspruch 3,
    dadurch gekennzeichnet,
    daß der elastische Körper seitlich über eine Abstufung (11) oder eine Abrundung in die Gleitführung (2) übergeht.

5.  Pose nach Anspruch 3,
    dadurch gekennzeichnet,
    daß der elastische Körper aus einem Ring besteht, der radial geschlitzt ist und in seinem Zentrum (10) in die Gleitführung (2) übergeht.

6.  Pose nach Anspruch 1,
    dadurch gekennzeichnet,
    daß die Gleitführung (2) aus einem zentralen Innenrohr besteht.

7.  Pose nach Anspruch 1,
    dadurch gekennzeichnet,
    daß die Klemmvorrichtung (6) am rutenseitigen Ende der Gleitführung (2) angeordnet ist.

8.  Pose nach Anspruch 1,
    dadurch gekennzeichnet,
    daß sie an ihrem der Klemmvorrichtung (6) gegenüberliegenden Ende der Gleitführung (2) einen vorstehenden Ring (3), insbesondere aus elastischem Material, aufweist.

9. Pose nach Anspruch 1,
dadurch gekennzeichnet,
daß die Klemmvorrichtung (6) in einem ihn seitlich umgebenden Träger (4) angeordnet ist.

10. Pose nach Anspruch 9,
dadurch gekennzeichnet,
daß der Träger (4) in Verlängerung der Schlitze (7) ihnen gegenüber vergrößerte Aussparungen (9) aufweist.

11. Pose nach Anspruch 1,
dadurch gekennzeichnet,
daß sie zumindest einen Haken (5) aufweist, in den die Angelschnur (8) einhängbar ist und der seitlich versetzt zur Gleitführung (2) derart angeordnet ist, daß bei eingehängter Angelschnur (8) die Schnur beim Nachgeben der Angel bis zum Erreichen des Grundes relativ zur Pose (1) durchrutscht, wogegen bei gestrafftem Schnurverlauf zwischen Angel und Pose beim Einholen der Schnur (8) die Pose (1) von der Angelschnur (8) gehalten und mitgenommen wird.

12. Pose nach Anspruch 11,
dadurch gekennzeichnet,
daß der Haken (5) an dem Träger (4) der Klemmvorrichtung (6) angeordnet ist.

Fig. 1

Fig. 2

Fig. 3

Fig. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | PATENT ABSTRACTS OF JAPAN vol. 14, no. 390 (C-751)(4333) 23. August 1990 & JP-A-2 145 141 ( KARISU INTANASHIYONARU K.K. ) 4. Juni 1990 * Zusammenfassung * --- | 1-3,5,6 | A01K93/00 |
| X | DE-U-6 925 743 (G. MAI) * Seite 4, Zeile 23 - Seite 5; Abbildungen * --- | 1,6,7 | |
| A | AT-B-362 610 (J. KUBISKO) * Seite 3, Zeile 36 - Seite 4, Zeile 7; Abbildungen * --- | 1-7,9 | |
| A | EP-A-0 119 074 (T. P. KESSLER) * Seite 9, Zeile 18 - Seite 10, Zeile 32; Abbildungen * --- | 1,11 | |
| D,A | DE-U-8 706 869 (S. TAAKE) * Seite 3; Abbildungen * ----- | 1,11 | RECHERCHIERTE SACHGEBIETE (Int. Cl.5 ) A01K |

Der vorliegende Recherchenbericht wurde für alle Patentansprüche erstellt

| Recherchenort | Abschlußdatum der Recherche | Prüfer |
|---|---|---|
| BERLIN | 18 SEPTEMBER 1992 | MARTIN DEL RIO A. |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
...................................................................
& : Mitglied der gleichen Patentfamilie, übereinstimmendes
    Dokument